# EUROPÄISCHE PATENTANMELDUNG

(11) **EP 0 567 852 A2**
(43) Veröffentlichungstag der Anmeldung: **03.11.1993**
(21) Anmeldenummer: 93106104.8
(22) Anmeldetag: 15.04.1993
(51) Int. Cl.: B01J 19/14, B01D 53/04, A23B 7/144, A23L 3/3427, B65D 81/20

(54) **Vorrichtung zur Anreicherung einer Behälteratmosphäre mit Stickstoff**

(30) Priorität: 18.04.1992 DE 4212995; 19.11.1992 DE 4238984
(71) Anmelder: Drägerwerk Aktiengesellschaft, D-23542 Lübeck (DE)
(72) Erfinder: Greiff, Rudolf, W-2401 Badendorf (DE); Huber, Wolfhard, Dr., W-2406 Stockelsdorf (DE); Schlör, Georg, W-2400 Lübeck (DE); Schlichting, Bernd, W-2400 Lübeck (DE); Gudat, Horst, Dr.-Ing., W-2400 Lübeck (DE)

(57) **Zusammenfassung**

Eine Vorrichtung zur Erzeugung einer mit Stickstoff angereicherten Atmosphäre in einem Behälter zur Aufbewahrung von verderblichen Gütern mit Hilfe einer Druckwechseladsorptionsanlage soll derart verbessert werden, daß die Anreicherung mit Stickstoff möglichst schnell erfolgt, und daß die Änderungen in der gewünschten Zusammensetzung ohne große Zeitverzögerung durchgeführt werden können. Außerdem soll die übrige Zusammensetzung der Atmosphäre im Behälter möglichst unbeeinflußt bleiben. Dazu ist vorgesehen, daß das Aggregat (1) über einen Verdichter (5) verfügt, und daß die Druckwechseladsorptionsanlage (3) in einem geschlossenen Kreislauf mit dem Behälter (30) derart verbunden ist, daß die Behälterluft abgesaugt, mit Stickstoff angereichert und an den Behälter wieder zurückgeführt wird. Die Adsorberbetten der Druckwechseladsorptionsanlage (3) sind mit einem zur Adsorption von Stickstoff geeigneten Molekularsieb (9) gefüllt. Durch diese Art der Befüllung ist die Druckwechseladsorptionsanlage (3) in Umkehrung zu den herkömmlichen, der Sauerstoffanreicherung dienenden Druckwechseladsorptionsanlagen betrieben.

## Beschreibung

Die Erfindung betrifft eine Vorichtung zur Erzeugung einer mit Stickstoff angereicherten Atmosphäre mit Hilfe einer Druckwechseladsorptionsanlage in einem Behälter für den Transport oder die Aufbewahrung von verderblichen Gütern, an welchen ein autarkes Aggregat zur Bereitstellung der Atmosphäre ankoppelbar ist.

Eine derartige Vorrichtung ist in der DE-OS 33 10 012 beschrieben.

Dort wird an einen transportablen Container eine Druckwechseladsorptionsanlage angeschlossen, durch welche über eine Ansaugleitung Luft aus der Umgebungsatmosphäre auf einen gewissen Überdruck komprimiert wird, wonach die komprimierte Luft über ein erstes Adsorptionsbett geleitet wird, in welchem ein Kohlenstoffmolekularsieb eingefüllt ist, das die Eigenschaft besitzt, selektiv Sauerstoff aus der Luft zu adsorbieren. Das auf diese Weise mit Stickstoff angereicherte Produktgas wird in den mit verderblichen Gütern (Lebensmittel, Pflanzen) beladenen Container eingeleitet. Die Beladung des Containers mit an Stickstoff angereicherter Atmosphäre verhindert ein frühzeitiges Altern der in dem Container befindlichen Produkte. Während des Adsorptionsvorganges im ersten Bett wird gleichzeitig das zweite Adsorptionsbett, ebenfalls mit einem Kohlenstoffmolekularsieb gefüllt, mit einem Teil des Produktgases gespült, wodurch der in ihm befindliche adsorbierte Sauerstoff desorbiert und an die Umgebung abgegeben wird. Auf diese Weise wird das verbrauchte Adsorptionsbett regeneriert, während das schon regenerierte Adsorptionsbett mit Sauerstoff neu beladen wird. Beladung und Regeneration der Adsorptionsbetten erfolgen in einem gesteuerten Wechselzyklus. Das bekannte Aggregat ist als eigenständiges System an den Container befestigbar.

Bei der bekannten Vorrichtung ist es von Nachteil, daß ständig Umgebungsluft angesaugt werden muß, die mit Stickstoff angereichert in den Container eingeblasen wird und diese aus möglichen Leckagen bzw. dafür vorgesehenen Öffnungen an die Umgebung wieder entweicht. Dadurch wird bei dieser Art von Durchspülung aus der Umgebung in den Container hinein und aus dem Container in die Umgebung wieder heraus auch die notwendige Wasserdampfkonzentration und der Kohlenstoffdioxidgehalt (CO₂) unerwünscht verändert. Wasserdampf ist zur Erhaltung der Frische der im Container aufbewahrten Güter erforderlich, und das von den Produkten erzeugte CO₂ soll in der Atmosphäre erhalten bleiben, um den Reifeprozess zu verzögern. Bei der bekannten Vorrichtung müßte in diesem Falle über mitzuführende CO₂-Vorratsbehälter gegebenenfalls CO₂ in den Container hinzugeführt werden.

Der vorliegenden Erfindung liegt somit die Aufgabe zugrunde, eine Vorrichtung der genannten Art so zu verbessern, daß die Anreicherung mit Stickstoff möglichst schnell erfolgt, und daß Änderungen in der gewünschten Zusammensetzung ohne große Zeitverzögerung durchgeführt werden können. Außerdem soll die übrige Zusammensetzung der Atmosphäre im Behälter möglichst unbeeinflußt bleiben.

Zur Lösung der Aufgabe ist vorgesehen, daß das Aggregat über einen Verdichter verfügt, der an den Behälter mittels einer Saugleitung zur Entnahme der im Behälter vorhandenen Luft anschließbar ist, und der die verdichtete Behälterluft an das mit einem den Stickstoff adsorbierenden Molekularsieb gefüllten Druckwechseladsorptionsbett derart weiterleitet, daß die Behälterluft zur Adsorption des Stickstoffes an den Eingang des Adsorptionsbettes geführt, daß das mit Sauerstoff angereicherte Produktgas der Entlüftungsleitung zugeführt, und der während der Regeneration des Adsorptionsbettes desorbierende Stickstoff als angereicherter Abgasstrom über eine Zufuhrleitung in den Behälter zurückgeführt ist.

Der Vorteil der Erfindung liegt im wesentlichen in folgenden Merkmalen: zum einen wird die Atmosphäre aus dem Behälter herausgezogen und mit Hilfe des Verdichters über die Adsorptionsbetten geleitet, und die mit Stickstoff angereicherte Atmosphäre in den Container wieder zurückgeführt. Dadurch erhöht sich insbesondere am Beginn einer Inertisierung der Behälteratmosphäre die Anreicherungsrate für Stickstoff, da sehr bald bei Fortschreiten der Sauerstoffverarmung im Behälter immer mehr Behälterluft über die Adsorptionsbetten geleitet wird, die ohnehin schon einen niedrigeren Sauerstoffgehalt besitzt. Ein evtl. entstehender Unterdruck im Behälter beim Ansaugen der Behälterluft durch den Verdichter wird durch kleine, ständig vorhandene Behälterleckagen ausgeglichen. Diese fallen bei den vorhandenen Förderleistungen jedoch nicht ins Gewicht. Zum anderen liegt ein wesentlicher Vorteil in der Art der Befüllung der Adsorptionsbetten, denn anstatt eines Kohlenstoffmolekularsiebes zur Adsorption von Sauerstoff wird nunmehr ein an sich bekanntes Molekularsieb zur Adsorption von Stickstoff verwandt. Dies führt zunächst zu folgenden vorteilhaften Ergebnissen: Wasserdampf und CO₂ werden durch die Kreislaufführung der Behälterluft nicht an die Umgebung ausgespült, sondern sie werden immer mitgeführt, weil ausschließlich Stickstoff adsorbiert wird, so daß eine Verarmung der Behälteratmosphäre an Wasserdampf und CO₂ unter normalen Bedingungen nicht auftritt. Außerdem können Molekularsiebe zur Adsorption von Stickstoff in ihrem Wirkungsgrad spezifisch auf die Stickstoffadsorption optimiert werden, z.B. durch geeignete Auswahl der Porengröße des verwendeten Siebes. Molekularsiebbetten zur Adsorption von Stickstoff sind darüberhinaus wesentlich preisgünstiger verfügbar als Kohlenstoffmolekularsiebe.

Wird ein Molekularsieb zur Adsorption von Stickstoff verwendet, wird das mit Sauerstoff angereicherte Produktgas an die Umgebung abgegeben, wohingegen das während der Desorptionsphase (Regeneration des schon mit Stickstoff beladenen Adsorptionsbettes) freiwerdende, mit Stickstoff angereicherte Desorbat als nunmehr erwünschtes Produktgas in den Behälter zurückgeführt wird. Es findet somit zum Zwecke der Stickstoffanreicherung eine Umkehrung der Wegführungen für das Produktgas einerseits und das Abgas andererseits statt: was bei der Sauerstoffanreicherung mit den hier verwendeten Molekularsiebbetten als Produktgas angesehen wird, gilt jetzt als Abgas, und was bei der Sauerstoffanreicherung als Abgas angesehen wird, ist hier als Produktgas zu benutzen. Entsprechend sind die Leitungsführungen vom Verdichter zu den Adsorptionsbetten und zum Behälter anzulegen.

Bei vorliegender Erfindung wird daher unter Verwendung eines für die Sauerstoffanreicherung günstigen Molekularsiebbettes unter Umkehrung der zur Sauerstoffanreicherung verfahrensmäßig vorgesehenen Adsorptions- und Desorptionsabläufe dasselbe Molekularsiebbett zur Stickstoffanreicherung für die Inertisierung von Behälteratmosphären zum Transport bzw. zur Lagerung verderblicher Güter eingesetzt. Die Vorteile sind: kurze Inertisierungszeiten, preisgünstige Füllung der Adsorberbetten, Beibehaltung der erwünschten Atmosphärenbestandteile Wasserdampf und CO₂.

Um sicherzustellen, daß der CO₂-Gehalt in der Behälterluft einen vorgebbaren Wert nicht überschreitet, ist das Aggregat mit einer Meßeinrichtung für den CO₂-Gehalt in der Behälterluft ausgestattet, durch welche bei Erreichen eines vorgebbaren Wertes für den CO₂-Anteil ein in der Zufuhrleitung angeordnetes Abblasventil geöffnet wird, durch das ein Teil des mit Stickstoff angereicherten Abgasstromes an die Umgebung abgeführt wird. Dadurch wird dem Behälter mehr Innenraumluft entnommen als zugeführt, so daß im Behälter ein leichter Unterdruck entsteht, durch den aus der Umgebung über vorhandene Leckagen oder über eine oder mehrere einstellbare Einlaßöffnungen Umgebungsluft angesaugt und somit der CO₂-Gehalt in der Behälteratmosphäre auf einfache Weise eingestellt werden kann.

Ist der CO₂-Anteil unerwünscht hoch, oder besteht die Gefahr einer erhöhten CO₂-Konzentration, kann ein CO₂-Absorber, mit Kalk gefüllt zur Absorption von CO₂, in die Kreislaufleitung zugeschaltet werden.

Es ist das Bestreben, den Behälter möglichst luftdicht auszuführen, bzw. mögliche Leckagen wenn es eben geht, gering zu halten, um eine schnelle und große Stickstoffanreicherung zu erzielen und aufrecht zu erhalten. Da in diesem Fall im Laufe der Betriebszeit ein Unterdruck im Behälter entstehen kann, weil ihm stets mehr Innenraumluft entzogen als zugeführt wird, ist es zum Zwecke des Ausgleichs eines solchen Hinterdruckes vorteilhaft, eine Belüftungsleitung vorzusehen. Diese ist an der Saugleitung zum Verdichten angeschlossen und enthält eine Belüftungsdrossel, die in ihrem Durchströmungsquerschnitt einstellbar ist. Bei geöffneter Drossel wird Umgebungsluft angesaugt und der aus dem Behälter angesaugten Innenraumluft zugemischt, gemeinsam im Adsorptionsbett von Sauerstoff befreit und dem Behälter zugeführt, so daß der entstandene Unterdruck abgebaut wird. Die Anordnung einer Belüftungsleitung an der Saugleitung hat gegenüber der Anbringung von z.B. Einlaßöffnungen am Behälter zum Zwecke des Druckausgleichs den Vorteil, daß nunmehr eine veränderbare Menge an Sauerstoff verarmter Umgebungsluft eingeführt wird.

Auch ist es besser möglich, die oben genannte unerwünscht hohe Konzentration durch Zumischung von an Sauerstoff verarmter Umgebungsluft zu senken, als dies durch bloßes Einblasen von unbehandelter Umgebungsluft in den Behälterraum zu verwirklichen. Die Menge der durch die Belüftungsdrossel anzusaugenden Umgebungsluft orientiert sich an der durch das Abblasventil abgegebenen Behälterluft.

Zur Durchführung des erfindungsgemäßen Kreislaufbetriebes zur Anreicherung der Behälterluft mit Stickstoff erweist sich der Einsatz eines Radialverdichters als besonders günstig, da er als Trockenläufer keinen Ölabscheider nötig hat bzw. keine zusätzlichen Filter im Strömungskreislauf benötigt. Außerdem arbeitet ein Radialverdichter druckabhängig vom Förderdruck, so daß insbesondere beim Beladen frisch regenerierter Adsorptionsbetten, wenn nämlich der Beladungsdruck noch nicht angestiegen ist, eine hohe Förderleistung erzielt wird, wodurch am Anfang die Adsorptionsbetten gut beladen werden und somit eine schnell einsetzenden Stickstoffanreicherung verwirklicht wird.

Durch Einstellung der Abgabemenge des an Sauerstoff angereicherten Produktgases an die Umgebung kann die für die Stickstoffanreicherung im Behälter benötigte Zeit bestimmt werden. Für stationäre Behälter, die im allgemeinen etwa 400 cbm Leervolumen besitzen, werden dazu anfänglich etwa 40 l/min an mit Sauerstoff angereichertem Produktgas an die Umgebung abgegeben. Der Stickstoffanteil in der Behälterluft steigt entsprechend schnell an. Sobald dieser auf etwa 90 Vol% angestiegen ist, wird die Abgabe an Produktgas auf etwa 20 l/min verringert, so daß jetzt mehr mit Stickstoff angereichertes Abgas durch die Zufuhrleitung in den Behälter zurückgeführt wird. Zu diesem Zweck werden in die Entlüftungsleitung eine oder mehrere, in ihrem Durchlaßvermögen einstellbare Drosseln vorgesehen, die entweder je nach dem im Behälter gemessenen Sauerstoff- oder Stickstoffgehalt in ihrem Durchlaß verändert werden, oder es ist eine Zeitsteuereinheit vorgesehen, durch die nach Ablauf eines vorgebbaren Zeitintervalls eine oder mehrere strömungsmäßig parallele Drosseln beschaltet werden, um den Durchlaß von beispielsweise 40 l/min auf 20 l/min zu verringern.

Um das Aggregat für den stationären, ortsgebundenen Einsatz besser geeignet zu machen, wird es auf ein Fahrgestell montiert, wobei lediglich ein Kupplungsanschluß an der Saugleitung und der Zufuhrleitung angebracht ist, die als einzige Verbindungsstellen vom Aggregat zu dem stationären Behälter angeschlossen zu werden brauchen. Somit kann ein Aggregat zur Stickstoffanreicherung für mehrere stationäre Behälter verwendet werden, indem beispielsweise zunächst ein erster, mit verderblichen Gütern schon vollständig beladener Behälter mit Stickstoff angereichert wird, und nach Erreichen der gewünschten Stickstoff- bzw. Sauerstoffkonzentration in diesem Behälter das Aggregat abgekoppelt, die Anschlußstutzen am Behälter abgedichtet und das Aggregat zum nächsten, inzwischen beladenen und verschlossenen Behälter geführt und dort angeschlossen wird, um an diesem Behälter die Stickstoffanreicheurng ebenfalls zu besorgen. Auf diese Weise ist es möglich, im Serienbetrieb mehrere Behälter je nach Arbeitsaufwand und Bedarfsfall mit einem Aggregat zu bedienen.

Durch die geschlossene Kreislaufförderung der Behälterluft über die Adsorptionsbetten und wieder zurück in den Behälter, und durch den Einsatz preisgünstiger Molekularsiebbetten zur Adsorption von Stickstoff ist es möglich, ein kompaktes, preisgünstiges Aggregat herzustellen, da zum einen ein leistungsfähiger, wartungsarmer Verdichter eingesetzt werden kann, und zum anderen die Adsorptionsbetten sehr wirkungsvoll arbeiten und zu einem äußerst niedrigen Preis auf dem Markt erhältlich sind. Deswegen ist es möglich, ein kompaktes und kostengünstiges Aggregat auch als Einheit an einen transportablen Container zu befestigen und ständig mit ihm zu führen, so daß Logistikprobleme während der weltweiten und weit entfernten Transportstrecken in dieser Hinsicht entfallen.

Ein Ausführungsbeispiel der Erfindung ist anhand einer schematischen Zeichnung dargestellt und wird im folgenden erläutert.

Es zeigen:
- Fig. 1: die schematische Darstellung einer Vorrichtung als Blockschaltbild,
- Fig. 2: die an einen Behälter angeschlossene Vorrichtung.

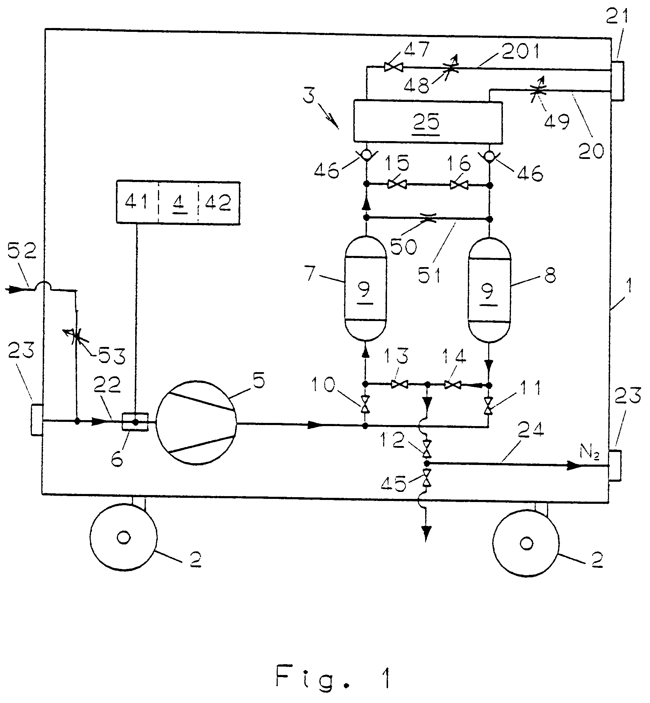

Die Figur 1 zeigt ein Aggregat zur Erzeugung einer mit Stickstoff angereicherten Atmosphäre in einem Fahrgestell (1) angeordnet, wobei die einzelnen Komponenten als Blockschaltbilder angedeutet sind. Das Fahrgestell (1) ist auf vier drehbaren Rollen (2) getragen, von welchen lediglich zwei dargestellt sind. Das Fahrgestell (1) enthält auf einem Chassis die Druckwechseladsorptionsanlage (3) sowie die Steuereinheit (4), die mit einer CO₂-Meßeinrichtung oder O₂-Meßeinrichtung (6) verbunden ist. Die Druckwechseladsorptionsanlage (3) besteht aus zwei Adsorberbetten (7, 8), die jeweils mit einem den Stickstoff adsorbierenden Molekularsieb (9) gefüllt sind. Zum Zwecke der Adsorption und Regeneration der Adsorberbetten (7, 8) sind deren Eingänge bzw. Ausgänge mit Ventilen (10, 11, 12, 13, 14, 15, 16) ausgestattet. Da die Adsorberbetten (7, 8) mit einem Molekularsieb (9) gefüllt sind, welches Stickstoff adsorbiert, ist das Produktgas der Druckwechseladsorptionsanlage ein mit Sauerstoff angereichertes Gas, das jedoch über eine Entlüftungsleitung (20) und einen Auslaß (21) ungenutzt an die Umgebung oder an sonstige, nicht dargestellte Verbraucher abgegeben wird. Der während der Regenerationsphase der Adsorberbetten (7, 8) desorbierende Stickstoff wird als Brauchgas über eine Zufuhrleitung (24) in einen Behälter (30) für verderbliche Güter eingeleitet.

Zur Anreicherung des Behälters (30) mit einer Atmosphäre erhöhten Stickstoffanteils saugt der Radialverdichter (5) Luft aus dem Behälter (30) über eine Saugleitung (22), die über ein Kupplungsstück (23) mit dem Behälter (30) verbunden ist. Die Behälterluft wird komprimiert und über das Ventil (10) dem Adsorberbett (7) zugeführt. Das Molekularsieb (9) im Adsorberbett (7) hält den in der Behälterluft enthaltenen Stickstoff zurück und läßt den Sauerstoffanteil über das zugehörige Rückschlagventil (46) in einen Speicherbehälter (25) einströmen. Von dort entweicht es über eine einstellbare Drossel (49) und die Entlüftungsleitung (20) und den Auslaß (21) an die Umgebung. Die Drossel (49) ist so eingestellt, daß die Abgabemenge etwa 20 l/min beträgt. Soll die Abgabemenge erhöht werden, z.B. auf 40 l/min, wird ein Ventil (47) geöffnet, welches den Inhalt des Speicherbehälters (25) zusätzlich über die parallel zur Entlüftungsleitung (20) angeordnete Entlüfungsleitung (201) und die in dieser Leitung (201) angeordnete Drossel (48) an den Auslaß (21) abführt.

Die Drossel (48) ist ebenfalls auf eine Abgabemenge von 20 l/min eingestellt. Während des Adsorptionsvorganges im Adsorberbett (7) wird das mit Stickstoff beladene Molekularsieb (9) des zweiten Adsorberbettes (8) mit einem Teilstrom an mit Sauerstoff angereichertem Produktgas aus dem Adsorberbett (7) regeneriert, indem die mit Sauerstoff angereicherte Behälterluft über eine Spülleitung (51) mit einer fest eingestellten Drossel (50) an den Ausgang des Adsorberbetts (8) geleitet und durch das Ventil (14) in die Zufuhrleitung (24) abgegeben wird. Die Ventile (11, 13) sind in diesem Falle geschlossen. Am Ende eines Adsorptions-/Regenerationszyklus werden zum Druckausgleich die beiden parallel zur Spülleitung (51) angeordneten Ausgleichsventile (15, 16) kurzzeitig geöffnet, um den Spülgasstrom kurzfristig zu erhöhen. Bei geöffnetem Ventil (12) vor der Zufuhrleitung (24) wird der mit Stickstoff angereicherte Abgasstrom über das Kupplungsstück (23) an den Behälter (30) abgegeben, dessen Innenraum somit mit Stickstoff angereichert wird. Ist das Adsorberbett (7) mit Stickstoff beladen, und das Adsorberbett (8) von Stickstoff befreit, d.h. regeneriert, wird durch Ventilumschaltung die Reihenfolge der Beladung und Regenerierung der Adsorberbetten (7, 8) umgekehrt. Dazu wird das Ventil (10) geschlossen und das Ventil (11) geöffnet, so daß nunmehr die über den Verdichter (5) angesaugte Behälterluft in das regenerierte Adsorberbett (8) strömt und dort der Stickstoff adsorbiert und der Sauerstoff über das Ventil (46) in den Speicherbehälter (25) abgegeben wird. Gleichzeitig wird ein Teilstrom von mit Sauerstoff angereicherter Luft aus dem Adsorberbett (8) über die Spülleitung (51) und Drossel (50) in das Adsorberbett (7) geleitet, dessen Molekularsieb (9) nunmehr regeneriert wird, wobei desorbierender Stickstoff über das Ventil (13) in die Zufuhrleitung (24) strömt. Das Ventil (14) ist in diesem Falle geschlossen. An die Zufuhrleitung (24) ist ein Abblasventil (45) angeschlossen, bei dessen Öffnen ein Teilstrom des mit Stickstoff angereicherten Abgases an die Umgebung entweicht und nicht in den Behälter (30) zurückgeführt wird. Dabei wird dann dem Behälter (30) mehr Innenraumluft entnommen als ihm zugeführt wird. Sämtliche Ventile (10, 11, 12, 13, 14, 15, 16, 45, 47) sind zu deren Betätigung an die Steuereinheit (4) angeschlossen.

Die Steuereinheit (4) ist weiterhin mit der CO₂-Meßeinrichtung bzw. O₂-Einrichtung (6) verbunden und besitzt eine Auswerteeinheit (41), durch die der CO₂-Anteil (O₂-Anteil) der in der Saugleitung (22) angesaugten Behälterluft aufgenommen und ausgewertet wird. Bei Überschreiten eines vorgebbaren Sollwertes betätigt die Steuereinheit (4) das Ventil (45). Da nunmehr in den Behälter (30) weniger mit Stickstoff angereicherte Luft zurückgeführt, als ihm entnommen wird, entsteht im Behälter (30) ein leichter Unterdruck, durch den durch ständig vorhandene Leckagestellen Umgebungsluft angesaugt und somit der CO₂-Anteil in der Behälteratmosphäre verringert wird. Reicht die Behälterleckage dazu nicht aus, kann an der Behälterwand eine Leckageöffnung vorgesehen werden, die in ihrem Durchlaß dem erzeugten Unterdruck nachgibt; dies kann beispielsweise durch ein federbelastetes Einlaßventil verwirklicht werden.

Des weiteren enthält die Steuereinheit (4) eine Zeitsteuerungseinheit (42), durch die das Ventil (47) wie oben beschrieben beschaltet wird.

Saugseitig zum Verdichter (5) ist an die Saugleitung (22) eine Belüftungsleitung (52) angeschlossen, durch die bei Bedarf über eine Belüftungsdrossel (53) Luft aus der Umgebung in den Verdichtungskreislauf angesaugt werden kann. Je nach Weite der einstellbaren Drosselöffnung wird mehr oder weniger viel Umgebungsluft in die Saugleitung (22) gefördert. Bei geschlossener Drossel (53) erfolgt die Ansaugung ausschließlich über das Kupplungsstück (23).

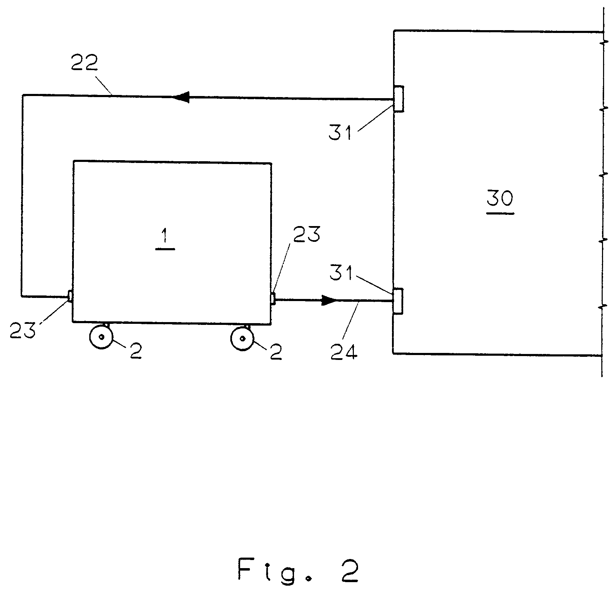

In Figur 2 ist die Anordnung des Aggregats in Verbindung mit dem Behälter (30) zur Aufnahme von verderblichen Gütern dargestellt. Der Behälter (30) kann ein herkömmlicher, bekannter Container oder ein Lagerraum für verderbliche Güter sein. Der Container (30) besitzt verschließbare Anschlußkupplungen (31), die einerseits mit der Saugleitung (22) und andererseits mit der Zufuhrleitung (24) verbunden sind. Das Aggregat ist in den Leitungskreislauf (22, 24) zwischengeschaltet und entnimmt ständig aus dem Behälter (30) Luft, und führt diesem über die Zufuhrleitung (24) die mit Stickstoff angereicherte Behälterluft wieder zu.

## Patentansprüche

1. Vorrichtung zur Erzeugung einer mit Stickstoff angereicherten Atmosphäre mit Hilfe einer Druckwechseladsorptionsanlage in einem Behälter für den Transport oder die Aufbewahrung von verderblichen Gütern, an den ein autarkes Aggregat zur Bereitstellung der Atmosphäre ankoppelbar ist, dadurch gekennzeichnet, daß das Aggregat (1) über einen Verdichter (5) verfügt, der an den Behälter (30) über eine Saugleitung (22) zur Entnahme der im Behälter (30) vorhandenen Luft anschließbar ist, und der die verdichtete Behälterluft an das mit einem den Stickstoff adsorbierenden Molekularsieb (9) gefüllten Druckwechseladsorptionsbett (7, 8) derart weiterleitet, daß die Behälterluft zur Adsorption des Stickstoffes an den Eingang des Adsorptionsbettes (7, 8) geführt, daß das mit Sauerstoff angereicherte Produktgas der Entlüftungsleitung (20) zugeführt, und der während der Regeneration des Adsorptionsbettes (7, 8) desorbierende Stickstoff als mit Stickstoff angereicherter Abgasstrom über eine Zufuhrleitung (24) in den Behälter (30) zurückgeführt ist.

2. Vorrichtung nach Anspruch 1, dadurch gekennzeichnet, daß das Aggregat (3) mit einer Meßeinrichtung (6) für den Gehalt an CO₂ in der Behälterluft ausgestattet ist, durch welche bei Erreichen eines vorgebbaren Wertes für den CO₂-Anteil ein in der Zufuhrleitung (24) angeordnetes Abblasventil (45) geöffnet wird, durch das ein Teil des mit Stickstoff angereicherten Abgasstroms an die Umgebung abgeführt wird.

3. Vorrichtung nach Anspruch 1 oder 2, dadurch gekennzeichnet, daß der Verdichter ein Radialverdichter (5) ist.

4. Vorrichtung nach einem der Ansprüche 1 bis 3, dadurch gekennzeichnet, daß das Aggregat (3) eine Zeitsteuerungseinheit (42) besitzt, durch die die Abgabemenge an mit Sauerstoff angereichertem Produktgas an die Umgebung durch Beschaltung von in der Entlüftungsleitung (20) angeordnete, in ihrem Durchlaßvermögen einstellbare Drosseln (48, 49) veränderbar ist.

5. Vorrichtung nach einem der Ansprüche 1 bis 4, dadurch gekennzeichnet, daß im Zuge der Saugleitung (22) eine Belüftungsleitung (52) mit einer einstellbaren Belüftungsdrossel (53) vorgesehen ist, durch welche bei geöffneter Drossel (53) Umgebungsluft in die Saugleitung (22) geführt ist.

6. Vorrichtung nach einem der Ansprüche 1 bis 5, dadurch gekennzeichent, daß das Aggregat (3) auf einem Fahrgestell (1) montiert ist, und daß sein Anschluß an den Behälter (30) über Kupplungsstücke (23) am Eingang der Saugleitung (22) und am Ausgang der Zufuhrleitung (24) erfolgt.
